# EUROPÄISCHE PATENTSCHRIFT

(11) **EP 3 391 088 B1**
(45) Veröffentlichungstag und Bekanntmachung des Hinweises auf die Patenterteilung: **11.12.2019**
(21) Anmeldenummer: 16784889.4
(22) Anmeldetag: 20.10.2016
(51) Int. Cl.: G01S 19/49, G01S 19/47

(54) **VERFAHREN, ELEKTRONISCHE STEUEREINRICHTUNG UND SYSTEM ZUR POSITIONSBESTIMMUNG**
METHOD, ELECTRONIC CONTROL DEVICE AND SYSTEM FOR POSITION DETERMINATION
PROCÉDÉ, DISPOSITIF DE COMMANDE ÉLECTRONIQUE ET SYSTÈME POUR LA DÉTERMINATION D'UNE POSITION

(30) Priorität: 14.12.2015 DE 102015225136
(43) Veröffentlichungstag der Anmeldung: 24.10.2018
(73) Patentinhaber: Robert Bosch GmbH, 70442 Stuttgart (DE)
(72) Erfinder: LANG, Steffi, 71642 Ludwigsburg (DE); BAUS, Michael, 74321 Bietigheim-Bissingen (DE); HUCK, Thorsten, 71711 Murr (DE)
(86) Internationale Anmeldenummer: PCT/EP2016/075184
(87) Internationale Veröffentlichungsnummer: WO 2017/102141

(56) Entgegenhaltungen:
- DE-A1- 10 031 244
- US-A1- 2009 150 075
- US-A1- 2014 358 434
- US-A1- 2015 276 936

## Beschreibung

### Stand der Technik

Sensoriken zur Bewegungsregelung und Lokalisierung bzw. Positionsbestimmung von Fahrzeugen, insbesondere von PKW, für bspw. hochautomatisierte Fahrfunktionen sind aus dem Stand der Technik bekannt.

Darunter fallen insbesondere Sensoriken zur Positionsbestimmung mittels satellitengestützten Navigationsvorrichtungen gekoppelt mit einer Inertialsensorik, um die Toleranz der Positionsbestimmung zu minimieren.

### Offenbarung der Erfindung

Die vorliegende Erfindung erweitert den Einsatz solcher Sensoriken auf Anwendungen mit Lastkraftwagen (LKW).

Die beschriebene Erfindung ermöglicht eine hochgenaue Lokalisierung bzw. Positionsbestimmung von LKW. Eine besondere Herausforderung besteht dabei in der Fahrerhausaufhängung, die in Bezug auf das Fahrgestell federnd gelagert ist.

Dadurch, dass das Fahrerhaus bei Lastkraftwagen relativ zum Fahrgestell federnd gelagert ist, führen Beschleunigungen, die auf den LKW einwirken, in Bezug auf das Fahrerhaus zu Bewegungen, insbesondere zu Wank- und Nickbewegungen, die das Fahrgestell nicht ausführt.

Aus der US 2015/276,936 A1 ist ein kaskadierend gekoppeltes Positionierungssystem bekannt, dass dazu eingerichtet ist die Position eines Fahrzeugs zu ermitteln. Das offenbarte System koppelt ein GNNS System mit einer ersten initialen Messeinheit. Das GNNS ist mit der ersten initialen Messeinheit mittels einer ersten Signalverarbeitungseinheit verbunden, die dazu eingerichtet ist eine sogenannte Tightly Coupled Positionierungslösung darzustellen. Die Tightly Coupled Positionierungslösung der ersten Signalverarbeitungseinheit ist in eine zweite Initialmessungseinheit integriert. Die Integration erfolgt mittels einer zweiten Signalverarbeitungseinheit die dazu eingerichtet ist, eine Loosly Coupled Positionierungslösung darzustellen.

Aus der US 2014/358,434 A1 offenbart ein Verfahren zur peer-assisted Navigation. Die Erfindung ermöglicht es die Ortbestimmung eines ersten mobilen Gerätes mittels der Ortbestimmung eines zweiten mobilen Gerätes zu optimieren, wenn das erste mobile Gerät einen sehr viel größeren Ortbestimmungsfehler aufweist als das zweite mobile Gerät. Für das erste Gerät gleicht seine optimierte Positionsbestimmung der Summe der Lokationsbestimmungen des zweiten Gerätes und der relativen Position der beiden Geräte zueinander.

Aus der US 2009/150,075 A1 ist eine Vorrichtung, ein Verfahren und ein Navigationsgerät zur Korrektur einer Winkelgeschwindigkeit bekannt. Gemäß einer Ausführungsform ermöglicht ein Empfindlichkeitskorrekturverfahren eines ersten Sensors zur Bestimmung der Variation der Sensorempfindlichkeit aufgrund eines verdeckten Winkels einer Winkelgeschwindigkeit in Bezug auf eine horizontale Ebene und ein Empfindlichkeitsfehler der Winkelgeschwindigkeit. Dabei wird ein Geschwindigkeitsfehler auf Basis einer Änderung der Sensorempfindlichkeit berechnet, die mittels eines Empfindlichkeitsverbesserungsverfahrens des ersten Sensors erlangt wird, um die Sensorempfindlichkeit zu Erlangen mittels einer Sensorempfindlichkeitskorrekturverfahrens des zweiten Sensors. Die Winkelgeschwindigkeit des Winkelgeschwindigkeitsermittlungssensors wird korrigiert durch die Nutzung des Empfindlichkeitsfehler.

Die vorliegende Erfindung beschreibt ein Verfahren und eine Vorrichtung, die den Einfluss dieser Bewegungen minimiert.

Erreicht wird dies durch ein Verfahren und dem dazugehörigen Computerprogramm sowie einer elektronischen Steuereinheit und einem System gemäß der unabhängigen Ansprüche.

Das Verfahren der vorliegenden Erfindung, betrifft die Positionsbestimmung eines Kraftfahrzeugs, insbesondere eines Lastkraftwagens, wobei das Kraftfahrzeug ein Fahrgestell und ein relativ zu dem Fahrgestell federnd gelagertes Fahrerhaus aufweist. Die Position des Kraftfahrzeugs wird mittels einer an dem Fahrerhaus angeordneten satellitengestützten Navigationseinrichtung erfasst, wobei für die Bestimmung der Position des Kraftfahrzeugs die erfasste Position abhängig von einem eine Relativbewegung zwischen dem Fahrerhaus und dem Fahrgestell repräsentierenden Korrekturwert korrigiert wird.

Vorteilhafte Ausführungsformen ergeben sich aus den abhängigen Ansprüchen und der nachfolgenden Beschreibung.

Die Anordnung der satellitengestützten Navigationseinrichtung bzw. des GNSS-Empfangsmoduls bzw. zumindest der Antenne des GNSS-Empfangsmoduls an dem Fahrerhaus, bevorzugt auf dem Dach des Fahrerhauses, ist vorteilhaft, da dadurch die "Sichtverbindung" zu den Satelliten der genutzten Globalen Navigationssatellitensysteme (GNSS) ohne störende Einflüsse von Bauteilen des Kraftfahrzeugs etabliert werden kann.

In einer Ausführungsform des Verfahrens wird der Korrekturwert abhängig von einem Signal einer an dem Fahrgestell angeordneten Inertialsensorik, insbesondere einer Beschleunigungssensorik, bestimmt.

Durch die Nutzung des Signals einer an dem Fahrgestell angeordneten Inertialsensorik, insbesondere einer Beschleunigungssensorik, zur Bestimmung des Korrekturwerts, kann sichergestellt werden, dass Toleranzen der durch die satellitengestützte Navigationseinrichtung ermittelten Position basierend auf Signalen, die so frei wie möglich von Einflüssen der Bewegungen des federnd gelagerten Fahrerhauses sind, minimiert werden.

Eine hochgenaue Lokalisierung bzw. Positionsbestimmung kann auf Basis von GNSS-Informationen gekoppelt mit den Signalen bzw. den Informationen einer Beschleunigungs- bzw. Inertialsensorik erfolgen. Eine verbesserte Performance, d.h. insbesondere eine minimierte Toleranz der Positionsbestimmung, kann durch den Einsatz eines sog. "tightly coupled" -Systems bzw. -Ansatzes erzielt werden.

Unter dem "tightly coupled"-Ansatz ist vorliegend zu verstehen, dass die Toleranz der Positionsbestimmung einer satellitengestützten Navigationseinrichtung durch die Koppelung mit einer Inertial- bzw. Beschleunigungssensorik verbessert wird, wobei die Inertial- bzw. Beschleunigungssensorik möglichst nahe an dem GNSS-Empfangsmodul bzw. der Antenne des GNSS-Empfangsmoduls der satellitengestützten Navigationseinrichtung angeordnet ist.

Gemäß einer Ausführungsform der vorliegenden Erfindung wird zur Erfassung der Position zusätzlich ein Signal verwendet, das von einer Inertialsensorik, insbesondere von einer Beschleunigungssensorik, stammt, die in oder an der Navigationseinrichtung angeordnet ist.

Vorzugsweise ist diese Inertialsensorik bzw. Beschleunigungssensorik nach dem "tightly coupled"-Ansatz in oder an der Navigationseinrichtung angeordnet.

Gemäß einer Variante dieser Ausführungsform wird der Korrekturwert abhängig von beiden Signalen der Inertialsensoriken bzw. Beschleunigungssenoriken bestimmt. D.h. der Korrekturwert wird abhängig von dem Signal der Inertialsensorik bzw. Beschleunigungssensorik, die in oder an der Navigationseinrichtung angeordnet ist und abhängig von dem Signal der Inertialsensorik bzw. Beschleunigungssensorik, die an dem Fahrgestell des Fahrzeugs angeordnet ist, bestimmt.

Dadurch kann die Performance der Positionsbestimmung der satellitengestützten Navigationseinrichtung weiter verbessert werden.

Vorzugsweise erfolgt die Bestimmung des Korrekturwerts abhängig von einem Vergleich dieser beiden Signale. Durch diesen Vergleich können die Einflüsse des federnd gelagerten Führerhauses wirksam eliminiert werden. Der Vergleich erfolgt dabei unter Nutzung bekannter Verfahren zum Vergleich zweier Signale von Inertialsensoriken bzw. Beschleunigungssensoriken.

Gemäß einem weiteren Aspekt der vorliegenden Erfindung wird der Korrekturwert alternativ oder zusätzlich abhängig von einem eine Bewegung des Fahrerhauses repräsentierenden Signal einer Höhenstandssensorik bzw. Abstandssensorik bestimmt. Insbesondere geht es dabei um die Erfassung einer Bewegung des Fahrerhauses in im Wesentlichen vertikaler Richtung, insbesondere in Bezug auf das Fahrgestell.

Unter einer Höhenstands- bzw. Abstandssensorik kann dabei vorliegend eine Vorrichtung zur Abstandsbestimmung von Kraftfahrzeugteilen verstanden werden. Eine solche Vorrichtung ist derart gestaltet, dass durch ein geeignetes Messprinzip der Abstand zwischen dem Fahrerhaus und dem Fahrgestell, insbesondere in vertikaler Richtung bestimmt werden kann.

Vorzugsweise erfolgt diese Bestimmung dynamisch, sodass der Einfluss der Bewegung des Führerhauses auf die Vorrichtung zur Positionsbestimmung bestimmt oder zumindest annähernd erfasst werden kann, um sie zur Verbesserung der Positionsbestimmung herauszurechnen bzw. zu kompensieren.

Weiterhin betrifft diese Erfindung ein System zur Positionsbestimmung eines Kraftfahrzeugs, insbesondere eines Lastkraftwagens, wobei das Kraftfahrzeug ein Fahrgestell und ein relativ zu dem Fahrgestell federnd gelagertes Fahrerhaus aufweist, wobei das System eine satellitengestützte Navigationseinrichtung umfasst, wobei das System derart gestaltet ist, dass das System das Verfahren der vorliegenden Erfindung ausführt.

Ein solches System minimiert die Toleranz der Positionsbestimmung mittels einer satellitengestützten Navigationseinrichtung.

Nachfolgend werden Ausführungsformen der vorliegenden Erfindung anhand von Figuren dargestellt und erläutert. Es zeigt:
- Fig. 1: eine schematische Darstellung einer Ausführungsform des Systems der vorliegenden Erfindung
- Fig. 2: ein Ablaufdiagram einer Ausführungsform eines Verfahrens der vorliegenden Erfindung

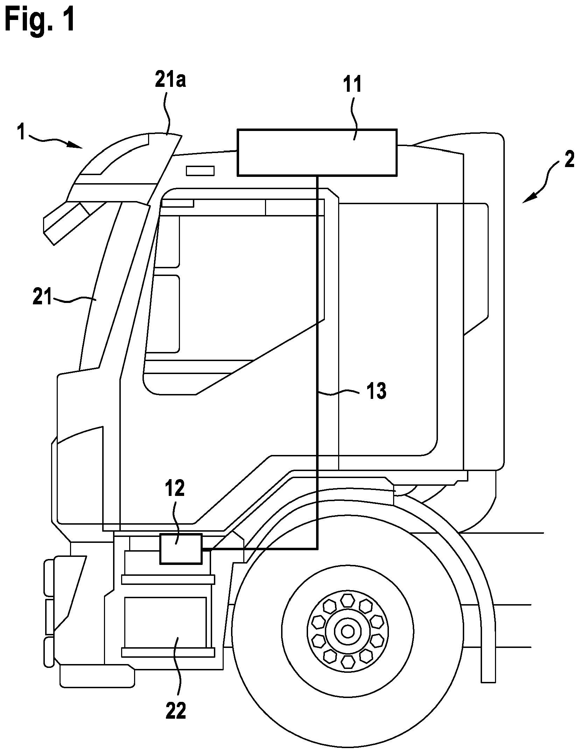

Fig. 1 zeigt eine schematische Darstellung einer Ausführungsform des Systems 1 der vorliegenden Erfindung. Dargestellt ist ein Kraftfahrzeug 2, vorliegend die Zugmaschine eines Lastkraftwagens 2. Das System umfasst eine satellitengestützte Navigationseinrichtung 11, die auf dem Dach 21a des Fahrerhauses 21 des Lastkraftwagens 2 angeordnet ist.

Weiterhin umfasst das System eine Inertialsensorik 12, beispielsweise eine Beschleunigungssensorik mit beschleunigungssensitiven Elementen in alle 6 Raumrichtungen (6D-Inertialsensorik). Die Inertialsensorik 12 ist an dem Fahrgestell 22 des Lastkraftwagens 2 angeordnet.

Das Fahrerhaus 21 ist dabei relativ zu dem Fahrgestell 22 federnd gelagert.

Die Signale bzw. Informationen der Inertialsensorik 12 bzw. der Beschleunigungssensorik werden mittels eines Kommunikationsmittels, bspw. eines Bussystems 13 der satellitengestützten Navigationseinrichtung 11 zur Verfügung gestellt. Denkbare Bussysteme sind dabei der CAN-Bus, FlexRay oder auch Ethernet.

Alternativ zu einem Bussystem kann auch eine Punkt-zu-Punkt-Verbindung bspw. nach dem SPI- oder PSI5-Standard eingesetzt werden.

Alternativ sind auch funkbasierte Kommunikationsmittel wie bspw. WLAN, Bluetooth, ZigBee udgl. denkbar.

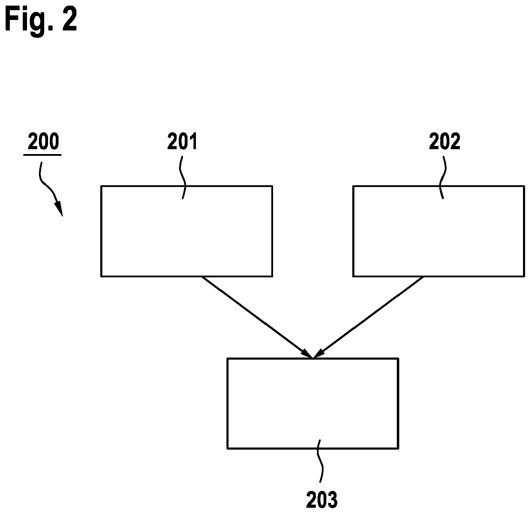

Fig. 2 zeigt ein Ablaufdiagramm eines Verfahrens 200 zur Positionsbestimmung eines Kraftfahrzeugs gemäß einer Ausführungsform der vorliegenden Erfindung.

In dem Schritt 201 wird eine Position des Kraftfahrzeugs mittels einer satellitengestützten Navigationseinrichtung 11 erfasst.

In dem Schritt 202 wird, insbesondere parallel bzw. im Wesentlichen zeitgleich zu Schritt 201, ein Korrekturwert abhängig von einem eine Relativbewegung zwischen dem Fahrerhaus 21 und dem Fahrgestell 22 repräsentierenden Wert bestimmt.

In dem Schritt 203 wird zur Bestimmung der Position die erfasste Position abhängig von einem Korrekturwert, der eine Relativbewegung zwischen dem Fahrerhaus und dem Fahrgestell des Kraftfahrzeugs repräsentiert, korrigiert.

## Patentansprüche

1. Verfahren (200) zur Positionsbestimmung eines Kraftfahrzeugs (2), insbesondere eines Lastkraftwagens (2), wobei das Kraftfahrzeug (2) ein Fahrgestell (22) und ein relativ zu dem Fahrgestell (22) federnd gelagertes Fahrerhaus (21) aufweist, wobei die Position des Kraftfahrzeugs (2) mittels einer an dem Fahrerhaus (21) angeordneten satellitengestützten Navigationseinrichtung (11) erfasst wird (201),
**dadurch gekennzeichnet, dass** für die Bestimmung der Position die erfasste Position abhängig von einem, eine Relativbewegung zwischen dem Fahrerhaus (21) und dem Fahrgestell (22) repräsentierenden, Korrekturwert korrigiert wird (203).

2. Verfahren (200) nach Anspruch 1, wobei der Korrekturwert abhängig von einem ersten Signal einer an dem Fahrgestell (22) angeordneten ersten Inertialsensorik (12), insbesondere einer Beschleunigungssensorik, bestimmt wird.

3. Verfahren nach Anspruch 1 oder 2, wobei die Position abhängig von einem zweiten Signal einer an oder in der Navigationseinrichtung (11) angeordneten zweiten Inertialsensorik, insbesondere einer Beschleunigungssensorik, erfasst wird (201), wobei insbesondere die zweite Inertialsensorik nach dem tightly-coupled Ansatz an der Navigationseinrichtung (11) angeordnet ist.

4. Verfahren (200) nach Anspruch 3, wobei der Korrekturwert abhängig von dem ersten Signal und dem zweiten Signal bestimmt wird (202), insbesondere abhängig von einem Vergleich des ersten Signals und des zweiten Signals miteinander.

5. Verfahren (200) nach Anspruch 4, wobei das erste Signal eine Nick- und/oder Wankbewegung des Fahrgestells (22) umfasst und das zweite Signal eine Nick- und/oder Wankbewegung des Fahrerhauses (21) umfasst.

6. Verfahren (200) nach einem der vorhergehenden Ansprüche, wobei die Relativbewegung eine Bewegung, insbesondere eine im Wesentlichen vertikale Bewegung des Fahrerhauses (21), insbesondere in Bezug auf das Fahrgestell (22), ist, die insbesondere mittels einer Abstandssensorik bestimmt wird (202).

7. Computerprogramm, welches eingerichtet ist, alle Schritte des Verfahrens (200) nach einem der Ansprüche 1 bis 6 auszuführen.

8. Maschinenlesbares Speichermedium, auf dem das Computerprogramm nach Anspruch 7 gespeichert ist.

9. Elektronische Steuereinheit, die eingerichtet ist, alle Schritte des Verfahrens (200) nach einem der Ansprüche 1 bis 6 auszuführen.

10. System (1) zur Positionsbestimmung eines Kraftfahrzeugs (2), insbesondere eines Lastkraftwagens (2), wobei das Kraftfahrzeug (2) ein Fahrgestell (22) und ein relativ zu dem Fahrgestell (22) federnd gelagertes Fahrerhaus (21) aufweist, wobei das System (1) eine satellitengestützte Navigationseinrichtung (11) umfasst und eine elektronische Steuereinheit nach Anspruch 9 umfasst.

11. System (1) nach Anspruch 10, wobei das System (1) eine an dem Fahrgestell (21) des Kraftfahrzeugs angeordnete Inertialsensorik (12), insbesondere eine Beschleunigungssensorik, umfasst.

12. System (1) nach Anspruch 10 oder 11, wobei das System (1) eine Abstandssensorik zur Erfassung einer Bewegung, insbesondere einer vertikalen Bewegung, des Fahrerhauses (21) umfasst.

## Claims

1. Method (200) for determining the position of a motor vehicle (2), in particular of a lorry (2), wherein the motor vehicle (2) comprises a chassis (22) and a driver's cab (21), which is spring-mounted relative to the chassis (22), wherein the position of the motor vehicle (2) is detected (201) by means of a satellite-based navigation device (11) arranged on the driver's cab (21),
**characterized in that**
in order to determine the position, the detected position is corrected (203) as a function of a correction value representing a relative movement between the driver's cab (21) and the chassis (22).

2. Method (200) according to Claim 1, wherein the correction value is determined as a function of a first signal of a first inertial sensor (12), in particular an acceleration sensor, arranged in the chassis (22).

3. Method according to Claim 1 or 2, wherein the position is detected (201) as a function of a second signal of a second inertial sensor, in particular an acceleration sensor, arranged on or in the navigation device (11), wherein in particular the second inertial sensor is arranged on the navigation device (11) according to the tightly coupled approach.

4. Method (200) according to Claim 3, wherein the correction value is determined (202) as a function of the first signal and the second signal, in particular as a function of a comparison of the first signal and the second signal with each other.

5. Method (200) according to Claim 4, wherein the first signal comprises a pitching and/or rolling motion of the chassis (22) and the second signal comprises a pitching and/or rolling motion of the driver's cab (21).

6. Method (200) according to any one of the preceding claims, wherein the relative motion is a motion, in particular, a substantially vertical motion of the driver's cab (21), in particular in relation to the chassis (22), which is determined (202) in particular by means of a distance sensor.

7. Computer program, which is configured to execute all steps of the method (200) according to any one of Claims 1 to 6.

8. Computer-readable storage medium, on which the computer program according to Claim 7 is stored.

9. Electronic control unit, which is configured to execute all steps of the method (200) according to any one of Claims 1 to 6.

10. System (1) for determining the position of a motor vehicle (2), in particular of a lorry (2), wherein the motor vehicle (2) comprises a chassis (22) and a driver's cab (21) which is spring-mounted relative to the chassis (22), wherein the system (1) comprises a satellite-based navigation device (11) and an electronic control unit according to Claim 9.

11. System (1) according to Claim 10, wherein the system (1) comprises an inertial sensor (12), in particular an acceleration sensor, arranged on the chassis (21) of the motor vehicle.

12. System (1) according to Claim 10 or 11, wherein the system (1) comprises a distance sensor for detecting a motion, in particular a vertical motion, of the driver's cab (21).

## Revendications

1. Procédé (200) de détermination de la position d'un véhicule automobile (2), notamment d'un poids-lourd (2), le véhicule automobile (2) possédant un châssis (22) et une cabine de conduite (21) montée suspendue sur ressorts par rapport au châssis (22), la position du véhicule automobile (2) étant détectée (201) au moyen d'un dispositif de navigation (11) assisté par satellites disposé dans la cabine de conduite (21),
**caractérisé en ce que** pour la détermination de la position, la position détectée est corrigée (203) en fonction d'une valeur de correction qui représente un mouvement relatif entre la cabine de conduite (21) et le châssis (22).

2. Procédé (200) selon la revendication 1, la valeur de correction étant déterminée en fonction d'un premier signal d'un premier système de détection inertiel (12) disposé sur le châssis (22), notamment un système de détection d'accélération.

3. Procédé selon la revendication 1 ou 2, la position étant détectée (201) en fonction d'un deuxième signal d'un deuxième système de détection inertiel disposé sur ou dans le dispositif de navigation (11), notamment un système de détection d'accélération, le deuxième système de détection inertiel étant notamment disposé sur le dispositif de navigation (11) selon le principe de la configuration groupée.

4. Procédé (200) selon la revendication 3, la valeur de correction étant déterminée (202) en fonction du premier signal et du deuxième signal, notamment en fonction d'une comparaison du premier signal et du deuxième signal entre eux.

5. Procédé (200) selon la revendication 4, le premier signal comprenant un mouvement de tangage et/ou de roulis du châssis (22) et le deuxième signal comprenant un mouvement de tangage et/ou de roulis de la cabine de conduite (21).

6. Procédé (200) selon l'une des revendications précédentes, le mouvement relatif étant un mouvement, notamment un mouvement sensiblement vertical de la cabine de conduite (21), notamment par rapport au châssis (22), qui est notamment déterminé (202) au moyen d'un système de détection d'écart.

7. Programme informatique, qui est conçu pour exécuter toutes les étapes du procédé (200) selon l'une des revendications 1 à 6.

8. Support d'enregistrement lisible par machine, sur lequel est enregistré le programme informatique selon la revendication 7.

9. Unité de commande électronique, qui est conçue pour exécuter toutes les étapes du procédé (200) selon l'une des revendications 1 à 6.

10. Système (1) de détermination de la position d'un véhicule automobile (2), notamment d'un poids-lourd (2), le véhicule automobile (2) possédant un châssis (22) et une cabine de conduite (21) montée suspendue sur ressorts par rapport au châssis (22), le système (1) comprenant un dispositif de navigation (11) assisté par satellites et une unité de commande électronique selon la revendication 9.

11. Système (1) selon la revendication 10, le système (1) comportant un système de détection inertiel (12) disposé sur le châssis (21) du véhicule automobile, notamment un système de détection d'accélération.

12. Système (1) selon la revendication 10 ou 11, le système (1) comportant un système de détection d'écart destiné à détecter un mouvement, notamment un mouvement vertical, de la cabine de conduite (21).
